# EUROPÄISCHE PATENTSCHRIFT

(11) **EP 1 107 683 B1**
(45) Veröffentlichungstag und Bekanntmachung des Hinweises auf die Patenterteilung: **29.05.2002**
(21) Anmeldenummer: 99938469.6
(22) Anmeldetag: 25.08.1999
(51) Int. Cl.: A47J 42/00

(54) **GEWÜRZMÜHLE**
SPICE MILL
MOULIN A EPICES

(30) Priorität: 25.08.1998 DE 29815232 U
(43) Veröffentlichungstag der Anmeldung: 20.06.2001
(73) Patentinhaber: Diefenbach, Berndt, D-80538 München (DE)
(72) Erfinder: Diefenbach, Berndt, D-80538 München (DE)
(74) Vertreter: Patentanwälte Feldmann & Partner AG
(86) Internationale Anmeldenummer: IB9901471
(87) Internationale Veröffentlichungsnummer: WO0010441

(56) Entgegenhaltungen:
- EP-A- 0 535 493
- WO-A-91/08697
- DE-U- 9 302 019

## Beschreibung

Die Erfindung betrifft eine Gewürzmühle, bestehend aus zwei Gewürzbehältern und Mahlwerken, die schwenkbar miteinander verbunden sind. Eine solche Gewürzmühle wie im Oberbegriff des Anspruchs 1 beschrieben ist aus DE-U-9302019 bekannt.

Gewürzmühlen dieser Art sind in unterschiedlichen Ausführungsformen bekannt.

Aufgabe der Erfindung ist es, eine Gewürzmühle der eingangs angegebenen Art zu schaffen, die bei eigenwilligem, ansprechendem Aussehen eine einfache und praktische Handhabung ermöglicht.

Erfindungsgemäss wird diese Aufgabe durch die Gewürzmühle gemäß Anspruch 1 gelöst, wobei die Gewürzbehäfter mit diese verschließenden Kopfstücken verbindbar sind, die mit in einer gemeinsamen Ebene liegenden Durchbrüchen auf einem Ring derart verschieblich geführt sind, daß sie zwischen Endstellungen, in deren einer diese winkelig zueinander stehen und in deren anderen sie etwa parallel zueinander verlaufen, schwenkbar sind und daß die freien Enden der etwa parallel zueinander verschwenkten Gewürzbehälter zu deren Längsachsen etwa rechtwinkelige Standflächen bilden

Bei der erfindungsgemässen Gewürzmühle bildet einerseits der Ring einen Handgriff, an dem diese ergriffen werden kann. Zum anderen lassen sich die beiden Gewürzbehälter über einen großen Winkel durch gleitende Verschiebung auf dem Ring relativ zueinander verschwenken, wobei die immaterielle Schwenkachse durch die Ringachse gebildet wird. Die erfindungsgemässe Gewürzmühle erweckt aufgrund ihrer eigenwilligen Ausgestaltung das Interesse eines Betrachters, der versucht ist, diese in Benutzung zu nehmen, um die besondere Art der gelenkigen Verbindung durch Verschwenken der Gewürzbehälter auszuprobieren.

Finden sich die beiden Gewürzbehälter in einer zueinander parallelen Stellung, läßt sich das Mahlwerk eines jeden Gewürzbehälters dadurch betätigen, daß der Benutzer die Gewürzmühle an dem anderen Gewürzbehälter oder dem Ring hält. Allerdings läßt sich in dieser Stellung das Mahlwerk nur um einen verhältnismäßig kleinen Winkel drehen, nämlich nur um einen so großen, bis die das Mahlwerk des einen Gewürzbehälters betätigenden Finger des Benutzers gegen den anderen Gewürzbehälter anstoßen. Sollen grössere Flächen bestreut werden oder ist die Abgabe einer größeren Menge von gemahlenem Gewürz gewünscht, lassen sich die Gewürzbehälter in eine winkelige Stellung zueinander verschwenken, in der der ausgeschwenkte Gewürzbehälter über einen grösseren Winkel gedreht oder sogar gleichsam kurbelartig betätigt werden kann.

Die Kopfstücke, die zugleich auch die lösbaren Verschlüsse oder Deckel für Gewürzbehälter bilden, können in geeigneter Weise mit den Gewürzbehältern verbunden werden, beispielsweise durch Steck-, Schraub- oder Bajonettverbindungen. Die Kopfstücke sind mit Führungen bildenden Durchbrüchen versehen, die komplementär zu dem Ring ausgebildet sind. Zweckmässigerweise besitzt der Ring einen im wesentlichen rechteckigen Querschnitt, so daß die Gewürzbehälter auf diesem um die Ringachse verschwenkbar geführt sind. Der Ring kann auch einen anderen mehreckigen oder unrunden Querschnitt besitzen, der eine Drehung der Gewürzbehälter um die Sekante des Ringes verhindert.

Die Kopfstücke können schräge Stirnflächen aufweisen, die in einer stumpfwinkeligen Schwenkstellung Anschlagflächen bilden.

Nach einer bevorzugten Ausführungsform ist vorgesehen, daß der Ring und die durch die Durchbrüche gebildeten Führungen mit Rasteinrichtungen versehen sind, durch die die Gewürzbehälter in unterschiedlichen Winkelstellungen zueinander lösbar gehalten sind. Die Rasteinrichtungen können aus an dem Kopfstück rechtwinkelig zu der Ebene des Ringes in Bohrungen gehalterten und aus Druckfedern beaufschlagten Kugeln bestehen, die in kalottenförmige Ausnehmungen des Ringes greifen. Die Rasteinrichtungen können derart über den Umfang des Ringes verteilt sein, daß die Gewürzbehälter relativ zueinander in Stellungen verrastet sind, in denen sie parallel zueinander stehen oder Winkel von 90° und 180° zueinander einschließen.

Ein Ausführungsbeispiel der Erfindung wird nachstehend anhand der Zeichnung näher erläutert. In dieser zeigt
- Fig. 1: eine Seitenansicht der Gewürzmühle, teilweise im Schnitt, und

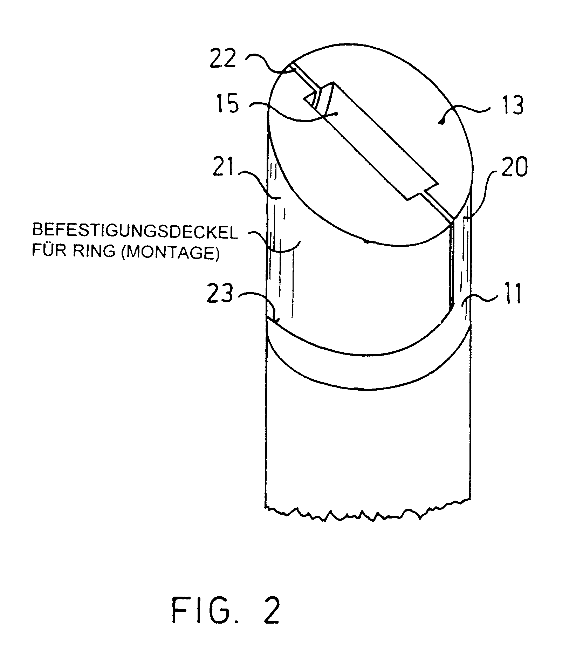

- Fig. 2: eine perspektivische Ansicht des Kopfstücks eines Gewürzbehälters.

Die Gewürzbehälter 1, 2 bestehen aus unteren zylindrischen Rohrstücken 3 aus Kunststoff, in deren unteren Bereichen übliche Mahlwerke angeordnet sind. Die rohrförmigen Kunststoffstücke 3 können sich nach unten hin konusartig erweitern, wobei die Ränder 4 der Endstücke in der dargestellten Weise Standflächen bilden. In ihrem oberen Bereich sind die Rohrstücke 3 drehbar aber in axialer Richtung unverschieblich mit Rohrstücken 6 verbunden, die vorzugsweise aus transparentem Kunststoff bestehen, um den Inhalt der Gewürzbehälter von außen erkennen zu lassen. Bei den zu mahlenden Gewürzen kann es sich außer um Pfeffer unterschiedlicher Art um andere zu mahlende Gewürze und auch um Salz handeln.

Das an sich bekannte Mahlwerk besteht aus einem Konus 7, der mit einem Gegenstück 8 mit einer komplementären Konusfläche zusammenwirkt. Der Konus 7 ist durch einen Schaft 9 und ein Haltestück 10 in bekannter Weise drehfest mit dem Rohrstück 6 verbunden. Das ringförmige Gegenstück 8 ist mit dem drehbaren Rohrstück 3 fest verbunden, wobei die zu mahlenden Güter von oben her zwischen die Mahlfläche des Konus 7 und des ringförmigen Gegenstücks 8 eintreten.

Die oberen transparenten Rohrstücke sind durch eine Schraubverbindung mit den Kopfstücken 11, 12 verbunden. Um die Gewürzbehälter 1, 2 befüllen zu können, können sie von den deckelartigen Kopfstücken 11, 12 abgeschraubt werden. Die kappenartigen Kopfstücke 11, 12 weisen abgeschrägte obere Stirnflächen 13, 14 auf.

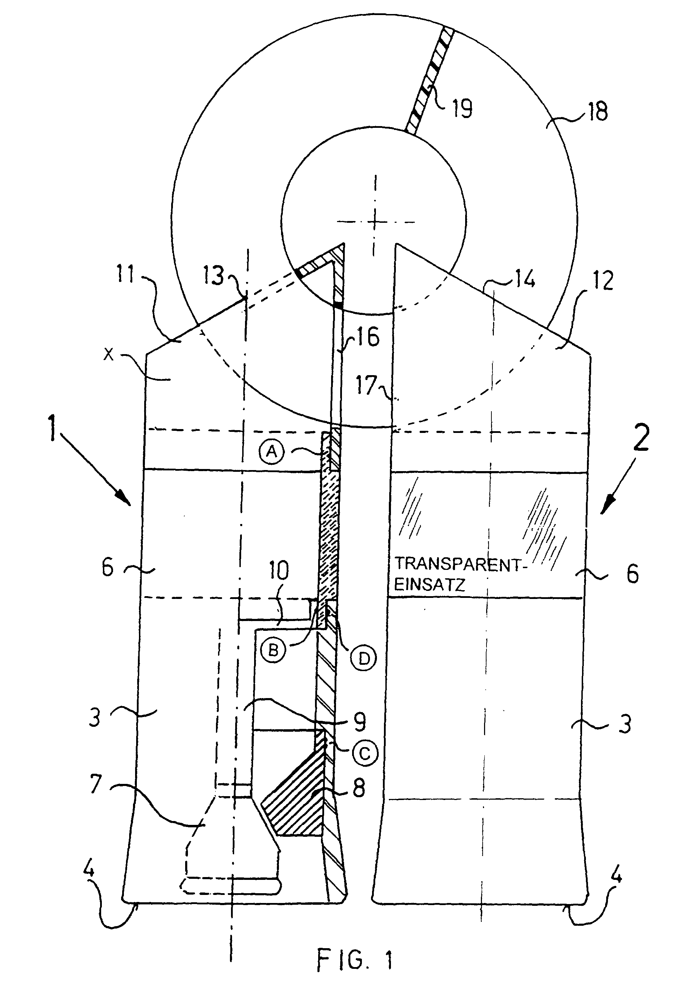

An diesen Stirnflächen münden Führungen 15, die aus kreisbogenförmig gekrümmten Durchbrüchen bestehen. Die Durchbrüche treten aus den Kopfstücken 11, 12 an deren längeren, in Fig. 1 einander zugewandten Seiten 16, 17 aus. In den Durchbrüchen 15 ist ein Ring 18 geführt, der einen dem Querschnitt der Durchbrüche 15 entsprechenden Querschnitt 19 aufweist. Die Krümmung der Durchbrüche 15 entspricht der Krümmung des kreisförmigen Ringes 18.

Um den Ring 18 glatt anliegend in die durch die Durchbrüche 15 gebildeten Führungen einbetten zu können, sind die Kopfstücke 11, 12 zweiteilig ausgeführt, wobei nach dem Einlegen des Ringes 18 die beiden Teile 20, 21 fest miteinander verbunden werden. Die Teile 20, 21 weisen eine Trennebene 22 auf, die entlang der Mittelebene verläuft und auf eine radiale Trennebene 23 stößt, so daß das Teil 21 in das Teil 20 einsetzbar ist und dieses zu dem Kopfstück 11, 12 ergänzt. Nach dem Einlegen des Ringes 18 in den die Führung bildenden Durchbruch 15 wird das Teil 21 durch nicht dargestellte Steck- und Klebverbindungen mit dem Teil 20 verbunden. Selbstverständlich sind auch andere Verbindungsarten möglich.

Die Schrägflächen 13, 14 liegen in Radialebenen des Ringes 18, so daß sie nach Verschwenken der Gewürzbehälter 1, 2 in einem stumpfen Winkel zueinander stumpf aufeinanderstoßen.

Durch entsprechende Anordnung der Durchbrüche 15 in den Kopfstücken 11, 12 lassen sich die Gewürzbehälter 1, 2 in einer Weise zueinander anordnen, daß sie in ihrer zueinander parallelen Stellung einen größeren oder kleineren Abstand voneinander aufweisen.

Die rohrförmigen Teile der Gewürzbehälter sowie die Kopfstücke und deren Teile und der Ring, auf dem die Kopfstücke gleitend geführt sind, bestehen zweckmässigerweise aus Kunststoffspritzgussteilen.

## Patentansprüche

1. Gewürzmühle, bestehend aus zwei Gewürzbehältern (1, 2) mit Mahlwerken (7, 8), die schwenkbar miteinander verbunden sind, wobei die Gewürzbehälter zwischen Endstellungen, in deren einen diese winkelig zueinander stehen und in deren anderen sie etwa parallel zueinander verlaufen verschwenkbar sind, und dass die freien Enden (4) der etwa parallel zueinander verschwenkten Gewürzbehälter (1, 2) zu deren Längsachsen etwa rechtwinkelige Standflächen bilden und die Gewürzbehälter (1, 2) mit diese verschließenden Kopfstücken (11, 12) verbindbar sind, **dadurch gekennzeichnet, dass** die Gewürzmühle einen einen Handgriff bildenden Ring (18) aufweist dessen Achse die immaterielle Schwenkachse bildet und wobei die Kopfstücke (11, 12) kreisbogenförmige Durchbrüche aufweisen, die von den Stirnflächen (13, 14) der Kopfstücke zu den einander zugewandten Seiten (16, 17) verlaufen und eine Krümmung entsprechend der Krümmung des Ringes (18) aufweisen.

2. Gewurzmühle nach Anspruch 1, **dadurch gekennzeichnet, dass** der Ring (18) einen im wesentlichen rechteckigen Querschnitt (19) besitzt.

3. Gewürzmühle nach Anspruch 1, **dadurch gekennzeichnet, dass** die Kopfstücke zweiteilig ausgeführt und die beiden Hälften fest miteinander verbunden sind.

4. Gewürzmühle nach einem der Ansprüche 1 bis 3, **dadurch gekennzeichnet, dass** der Ring (18) und die durch die Durchbrüche gebildeten Führungen (15) mit Rasteinrichtungen versehen sind, durch die die Gewürzbehälter (1, 2) in unterschiedlichen Winkelstellungen lösbar zueinander gehalten sind.

5. Gewürzmühle nach Anspruch 4, **dadurch gekennzeichnet dass** der Ring (18) kalottenförmige Ausnehmungen aufweist, die mit in Bohrungen druckbeaufschlagt gelagerten Kugeln zusammen die Rasteinrichtungen bilden.

## Claims

1. A spice mill, consisting of two spice containers (1, 2) with grinders (7, 8), which are pivotably connected with each other, wherein the spice containers are pivotable between end positions, in one of which they are located at an angle in respect to each other, and in the other extend approximately parallel with each other, and that the free end (4) of the spice containers (1, 2), which have been pivoted approximately parallel with each other, form bases, which extend approximately at right angles to each other and the spice containers (1, 2) can be connected with headpieces (11, 12), which close the latter **characterized in that** the spice mill has a ring (18), which constitutes a handle and whose axis constitutes the imaginary pivot axis, and wherein the headpieces (11, 12) have openings in the shape of arcs of a circle, which extend from the front faces (13, 14) of the headpieces toward the facing sides (16, 17) and have a curvature corresponding to the curvature of the ring (18).

2. The spice mill in accordance with claim 1, **characterized in that** the ring (18) has an essentially rectangular cross section (19).

3. The spice mill in accordance with claim or 2, **characterized in that** the headpieces are made in two parts and the two halves are fixedly connected with each other.

4. The spice mill in accordance with one of claims 1 to 3, **characterized in that** the ring (18), and the guides (15) constituted by the openings, are provided with snap-in devices, by means of which the spice containers (1, 2) are releasably maintained in different angular positions in respect to each other.

5. The spice mill in accordance with claims 4, **characterized in that** the ring (18) has cup-shaped recesses which, together with spheres which are seated in bores and are charged with pressure, constitute the detent devices.

## Revendications

1. Moulin à épices composé de deux bacs à épices (1, 2) avec des broyeurs (7, 8) raccordés entre eux de manière pivotante, les bacs à épices étant pivotants entre des positions finales dans l'une desquelles ceux-ci sont à angles l'un par rapport à l'autre, et dans l'autre desquelles ils sont à peu près parallèles l'un à l'autre, et les extrémités libres (4) des bacs à épices (1, 2) pivotés, à peu près parallèlement l'un à l'autre, forment des surfaces de pose rectangulaires par rapport à leurs axes longitudinaux, et les bacs à épices (1, 2) étant raccordables avec les pièces de tête (11, 12) les verrouillant, **caractérisé en ce que** le moulin à épices présente un anneau (18) formant une poignée, anneau dont l'axe forme l'axe de pivotement immatériel, et les pièces de tête (11, 12) présentant des passages en forme d'arc de cercle qui vont des surfaces frontales (13, 14) des pièces de tête aux côtés (16, 17) tournés l'un vers l'autre et qui présentent une courbure correspondant à la courbure de l'anneau (18).

2. Moulin à épices selon la revendication 1, **caractérisé en ce que** l'anneau (18) possède une section (19) essentiellement rectangulaire.

3. Moulin à épices selon la revendication 1, **caractérisé en ce que** les pièces de tête sont exécutées en deux parties et que les deux moitiés sont raccordées entre elles de manière fixe.

4. Moulin à épices selon l'une des revendications 1 à 3, **caractérisé en ce que** l'anneau (18) et les guidages (15) formés par les passages sont munis de dispositifs à encliquetage par lesquels les bacs à épices (1, 2) sont maintenus dans différentes positions angulaires de manière amovible l'un par rapport à l'autre.

5. Moulin à épices selon la revendication 4, **caractérisé en ce que** l'anneau (18) présente des évidements en forme de calotte qui forment ensemble, avec les sphères placées sous pression dans des alésages, dispositifs à encliquetage.
